# EUROPÄISCHE PATENTSCHRIFT

(11) **EP 3 189 087 B1**
(45) Veröffentlichungstag und Bekanntmachung des Hinweises auf die Patenterteilung: **04.12.2024**
(21) Anmeldenummer: 15750074.5
(22) Anmeldetag: 17.08.2015
(51) Int. Cl.: C08G 18/42, C08G 18/76, C08G 18/12

(54) **ZWEIKOMPONENTIGER POLYURETHANSCHMELZKLEBSTOFF MIT HOHER ANFANGS- UND ENDFESTIGKEIT**
TWO-COMPONENT POLYURETHANE HOT-MELT ADHESIVE WITH HIGH INITIAL AND FINAL STRENGTH
ADHÉSIF DE POLYURÉTHANE À DEUX COMPOSANTS AYANT UNE RÉSISTANCE INITIALE ET FINALE ÉLEVÉE

(30) Priorität: 05.09.2014 DE 102014217783
(43) Veröffentlichungstag der Anmeldung: 12.07.2017
(73) Patentinhaber: Evonik Operations GmbH, 45128 Essen (DE)
(72) Erfinder: BRENNER, Gabriele, 48249 Dülmen (DE); DREES, Birgit, 44651 Herne (DE); CRON, Christina, 42555 Velbert (DE); FUCHS, Kerstin, 45772 Marl (DE)
(74) Vertreter: Evonik Patent Association
(86) Internationale Anmeldenummer: PCT/EP2015/068818
(87) Internationale Veröffentlichungsnummer: WO 2016/034394

(56) Entgegenhaltungen:
- EP-A1- 0 590 398
- WO-A1-02/083807
- WO-A1-91/15530
- WO-A1-94/12552

## Beschreibung

Die vorliegende Erfindung betrifft ein Verfahren zur Herstellung von Verklebungen auf Basis zweikomponentiger Polyurethanklebstoffe für semistrukturelle und strukturelle Verklebungen, die als Schmelze aufgetragen werden und eine hohe Handhabungsfestigkeit besitzen.

Strukturelle zweikomponentige Polyurethanklebstoffe aus Polyolen und Polyisocyanaten sind bereits seit langem Stand der Technik. Sie härten nach dem Mischen schnell aus und können deshalb bereits nach kurzer Zeit Kräfte aufnehmen und übertragen. Strukturelle Klebstoffe, auch Konstruktionsklebstoffe oder Montageklebstoffe genannt, werden in der Fertigungsindustrie verwendet, um Bauteile so miteinander zu verkleben, dass der Klebeverbund Teil einer dauerhaft belastbaren Konstruktion ist. Solche Klebstoffe sind typischerweise zäh-elastisch und müssen hohe Ansprüche in Bezug auf Verarbeitbarkeit, Festigkeit und Anhaftungskräfte erfüllen.

Aus dem Stand der Technik sind Polyurethanklebstoffe aus Polyolen und Polyisocyanaten bekannt, bei denen sowohl die Polyol- als auch die PolyisocyanatKomponente bei Raumtemperatur flüssig sind, das heißt die Glasübergangstemperaturen und gegebenenfalls Schmelzpunkte liegen unterhalb von 23 °C. Beispielsweise beschreiben die Anmeldungen DE 102007062529 und EP 2655466 flüssige Polyurethanklebstoffe, die sich aus mindestens einer höherfunktionellen Polyol-Komponente zusammensetzen. Dadurch sollen hohe Endfestigkeiten bei gleichzeitig hoher Dehnung erzielt werden können. Diese Eigenschaften sind beispielsweise für die Verklebung von Windkraftflügelhalbschalen notwendig.

WO 02/083807 A1 beschreibt eine Klebstoffformulierung enthaltend ein Polyisocyanat in Form eines NCO-funktionalisierten Polyurethan-Prepolymers, sowie ein OH-funktionelles Harz und ein Polyesterpolyol.

EP 0590398 A1 beschreibt eine zweikomponentige Klebstoffzusammensetzung, enthaltend einen Polyester ein weiteres Polyol mit einer Funktionalität größer 2, sowie NCO-funktionelles Polyurethan-Prepolymer.

WO 91/15530 A1 offenbart zweikomponentige Klebstoffzusammensetzungen für reaktive Schmelzklebstoffe. Die Zusammensetzung weist neben einem NCOfunktionellen Prepolymer ein Polyesterpolyol auf, welches bei Raumtemperatur fest ist.

WO 94/12552 A1 offenbart einen einkomponentigen reaktiven Schmelzklebstoff, der erhalten wird, in dem eine Mischung eines Polyetherglykols und eines bei Raumtemperatur festen Polyesterpolyol vorgelegt werden und dann MDI zugegeben und zur Reaktion gebracht wird.

In den Anmeldungen WO2009/015149, EP 2706075 und EP 2700666 sind ebenfalls flüssige Zweikomponenten-Polyurethanklebstoffe beschrieben. Diese strukturellen Klebstoffe sollen neben einer guten Metall- und Kunststoffhaftung ein einheitliches E-Modul über einen breiten Temperaturbereich aufweisen und sich für Verklebungen im Automobilbereich eignen.

Der Nachteil der oben beschriebenen Systeme ist eine vergleichsweise geringe Handhabungsfestigkeit direkt nach dem Fügen der Substrate. Eine hohe Anfangs-oder Handhabungsfestigkeit ist jedoch notwendig, um hohe Taktzeiten in der Produktion zu ermöglichen. Für eine ausreichende Handhabungsfestigkeit ist eine Zugscherfestigkeit von mindestens 0,3 MPa erforderlich, bevor die Fixierungen gelöst werden können (A. Lutz, S. Schmatloch, "Strukturelles Verkleben von Faserverbundwerkstoffen im Fahrzeugbau", lightweight design, März 2014).

Bei den flüssigen zweikomponentigen Polyurethansystemen des Stands der Technik entsteht die Kohäsion der Klebverbindung nur durch eine chemische Vernetzung der Polyolkomponente mit der Polyisocyanatkomponente und ist daher an den Reaktionsfortschritt geknüpft. Daher sind die Klebverbindungen direkt nach dem Auftrag noch nicht mechanisch belastbar und die Substrate können sich gegeneinander verschieben. Typische Aushärtezeiten bis zum Erreichen der Handhabungsfestigkeit liegen bei 40 Minuten bis 6 Stunden (vgl. A. Lutz, S. Schmatloch, "Strukturelles Verkleben von Faserverbundwerkstoffen im Fahrzeugbau", lightweight design, März 2014).

Durch den Zusatz von Katalysatoren lässt sich die Aushärtung beschleunigen, neben den bekannten zinnhaltigen Systemen beschreibt beispielsweise die EP 2706075 einen Metall-Chelat-Komplex, der eine rasche und blasenfreie Aushärtung ermöglicht. Die Vernetzung und somit die Handhabungsfestigkeit sind jedoch stark abhängig von der Wahl des Katalysators und der korrekten Dosierung.

Um eine rasche Weiterarbeitung zu ermöglichen, werden die Verklebungen mit zweikomponentigen Klebstoffen, die bei Raumtemperatur flüssig sind, darüber hinaus mit Hilfe von thermischen Verfahren, zum Beispiel durch Infraroterwärmung oder Induktion, bei Temperaturen zwischen ca. 60 und 120 °C flächig oder punktuell vorgehärtet. Der Nachteil dieses Verfahrens liegt in einem zusätzlichen Verarbeitungsschritt.

Aufgabe der vorliegenden Erfindung ist daher die Bereitstellung eines verbesserten zweikomponentigen (semi-)strukturellen Klebstoffs.

Überraschenderweise kann im Rahmen der vorliegenden Erfindung gezeigt werden, dass Formulierungen gemäß der vorliegenden Erfindung diese komplexe Aufgabe erfüllen. Im Gegensatz zum Stand der Technik enthält die erfindungsgemäß eingesetzte Formulierung nicht ausschließlich flüssige, sondern auch bei Raumtemperatur feste Bestandteile in einer oder beiden Komponenten. Das bedeutet, dass zumindest ein Bestandteil einen Schmelzpunkt und/oder einen Glasübergangspunkt von über 23 °C besitzt.

Die Klebstoffe der vorliegenden Erfindung besitzen neben einer hohen Endfestigkeit und Dehnung eine gute Handhabungsfestigkeit nach dem Fügen. Die Handhabungsfestigkeit im Rahmen der vorliegenden Erfindung meint die notwendige Klebfestigkeit, um verklebte Substrate ohne weitere mechanische Fixierung einer weiteren Verarbeitung zuführen zu können. Darüber hinaus kann nach der Applikation auf den Einsatz von Katalysatoren oder thermischen Vorreaktionen verzichtet werden. Auf diese Weise können kurze Taktzeiten während des Fügeprozesses realisiert werden und die Fehleranfälligkeit bei der Dosierung kann gering gehalten werden.

Ein erster Gegenstand der vorliegenden Erfindung ist ein Verfahren zur Herstellung von Verklebungen auf Basis zweikomponentiger Polyurethanklebstoffe umfassend eine erste Komponente A enthaltend mindestens einen Polyester A1, der bei Raumtemperatur fest ist und mindestens ein Polyol A2 mit einer Hydroxylgruppenfunktionalität größer 2,0 und optional Additive und eine zweite Komponente B enthaltend Isocyanatgruppen aufweisende Polyurethanpräpolymere und optional Additive, umfassend das getrennte Aufschmelzen der A und B-Komponenten abhängig von der Schmelzviskosität auf Temperaturen oberhalb der Schmelz- und/oder Glasübergangspunkte aller Bestandteile in beiden Komponenten, Mischen der beiden flüssigen Komponenten A und B und anschließenden Auftrag auf die zu verklebenden Substrate.

Die A-Komponente der Polyurethanklebstoffe besteht aus einer Mischung aus einem Polyester A1, der bei Raumtemperatur fest ist und mindestens einem Polyol A2 mit einer Hydroxylgruppenfunktionalität größer 2,0.

Die erfindungsgemäß eingesetzten Polyester A1 sind bei Raumtemperatur fest, d. h. die Glasübergangstemperatur und/oder der Schmelzpunkt von A1 liegen oberhalb der Raumtemperatur von 23 °C. Die Polyester A1 können entweder amorph oder kristallin sein. Die Bestimmung des Glasübergangspunkts und des Schmelzpunkts erfolgt nach der DSC-Methode nach DIN 53765.

Die Polyester A1 können durch Polykondensation von Di- oder Polyolen und Di- oder Polycarbonsäuren bzw. deren Derivaten hergestellt werden. Bezüglich der in der Synthese der Polyester eingesetzten Monomere gibt es prinzipiell keine Einschränkungen. Bevorzugt basiert der Polyester A1 auf Di- oder Polycarbonsäuren ausgewählt aus Bernsteinsäure, Adipinsäure, Sebazinsäure, Dodekandisäure, Terephthalsäure, Isophthalsäure, Phthalsäure und Hexahydrophthalsäure und auf Di-oder Polyolen ausgewählt aus Ethylenglykol, Neopentylglykol, Hydroxypivalinsäureneopentylglykolester, 1,4-Butandiol, Butylethylbutandiol, Cyclohexandimethanol und 1,6-Hexandiol.

Im Rahmen der vorliegenden Erfindung werden unter Di- oder Polycarbonsäuren bzw. deren Derivaten insbesondere die Säuren und deren Anhydride verstanden.

Polyester mit einem Glasübergangspunkt oberhalb von 23 °C werden bevorzugt aus aromatischen Di- oder Polycarbonsäuren wie Terephthalsäure und Isophthalsäure erhalten, in Bezug auf das Diol gibt es keine bevorzugten Monomere. Polyester mit einem Schmelzpunkt oberhalb von 23 °C werden bevorzugt aus linearen aliphatischen Di- oder Polycarbonsäuren, wie Bernsteinsäure, Adipinsäure, Sebazinsäure und Dodekandisäure oder Terephthalsäure und linearen aliphatischen Diolen, wie 1,4-Butandiol und 1,6-Hexandiol erhalten.

Es können auch Polycarbonsäuren und Polyole mit höheren Funktionalitäten eingesetzt werden. Im Rahmen der vorliegenden Erfindung können Mischungen unterschiedlicher Polyester A1 eingesetzt werden.

Die Polyester A1 weisen vorzugsweise eine Funktionalität von mindestens einer Hydroxylendgruppe auf. Bevorzugt weisen die Polyester A1 eine Funktionalität zwischen 1,0 und 3,0, besonders bevorzugt sind Hydroxyfunktionalitäten von 2,0. Die Hydroxyfunktionalität des Polyesters wird durch die Funktionalitäten der eingesetzten Di- oder Polyole und Di- oder Polycarbonsäuren gesteuert.

Das zahlenmittlere Molekulargewicht der Polyester A1 beträgt 100 - 10 000 g/mol, vorzugsweise 1000 - 5000 g/mol. Es wird nach DIN 55672-1 mittels Gelpermeationschromatographie in Tetrahydrofuran als Eluent und Polystyrol zur Kalibrierung bestimmt.

Entsprechend der Funktionalität und dem Molekulargewicht der Polyole liegt die Konzentration an Hydroxylendgruppen zwischen 10 und 500 mg KOH/g, bevorzugt zwischen 20 und 50 mg KOH/g, titrimetrisch nach DIN 53240-2 bestimmt. Die Konzentration an Säureendgruppen, bestimmt nach DIN EN ISO 2114, liegt unter 2 mg KOH/g, bevorzugt unter 1 mg KOH/g.

Das Polyol A2 kann amorph oder kristallin und bei Raumtemperatur fest oder flüssig sein. Bei dem Polyol A2 kann es sich auch um eine Mischung unterschiedlicher Polyole handeln, wesentlich ist, dass mindestens ein Polyol der Mischung A2 eine Hydroxylgruppenfunktionalität von größer 2,0 aufweist.

Das erfindungsgemäß eingesetzte Polyol A2 bzw. die Polyolmischung A2 besitzen eine Funktionalität von mehr als zwei Hydroxylendgruppen. Bevorzugt sind Funktionalitäten zwischen 2,1 und 5, besonders bevorzugt beträgt die Hydroxylgruppenfunktionalität des Polyols A2 3,0.

Bei dem erfindungsgemäß eingesetzten Polyol bzw. der Polyolmischung A2 kann es sich um jedes bekannte Polyol, beispielsweise Polyether, Polyacrylate, Polycarbonate oder hydroxyterminierte Polyolefine oder Polyester handeln.

Im Falle von Polyethern handelt es sich vorzugsweise um Polyethylenglykole, Polypropylenglykole, Polytetrahydrofuran oder Copolymere daraus.

Im Falle von Polyacrylaten handelt es sich vorzugsweise um Polyacrylate, die mindestens eine Hydroxyfunktionalität besitzen und durch freie radikalische Polymerisation von Acrylaten oder Methacrylaten, wie beispielsweise Methylmethacrylat, Butylmethacrylat, Hydroxyethylacrylat oder Hydroxyethylmethacrylat, zugänglich sind

Im Falle von Polycarbonaten handelt es sich vorzugsweise um Reaktionsprodukte aus Dialkyl- oder Diarylcarbonaten, wie Dimethylcarbonat oder Diphenylcarbonat, und linearen aliphatischen Diolen, wie beispielsweise 1,5-Pentandiol oder 1,6-Hexandiol.

Im Falle von hydroxyterminierten Polyolefinen handelt es sich vorzugsweise um Polybutadiene, die über eine radikalische Polymerisation von Butadien mit Wasserstoffperoxid als Initiator dargestellt werden.

Bevorzugt handelt es sich bei dem Polyol A2 um einen Polyester bzw. eine Mischung von Polyestern, die durch Polykondensation von Di- oder Polyolen und Di- oder Polycarbonsäuren bzw. deren Derivaten hergestellt werden. Besonders bevorzugt sind als Monomere die Dicarbonsäuren Adipinsäure, Isophthalsäure und Terephthalsäure sowie als trifunktionelle Carbonsäure Trimellitsäureanhydrid. Als Polyole sind Ethylenglykol, Neopentylglykol, 1,6-Hexandiol und Trimethylolpropan besonders geeignet. Bei den Monomeren kann sich aber auch um alle anderen bekannten Di- oder Polycarbonsäuren und Di- oder Polyole handeln.

Die Hydroxylgruppenfunktionalität des Polyesters ergibt sich aus den Funktionalitäten der eingesetzten Monomere. Um eine Hydroxylgruppenfunktionalität des Polyesters von größer als 2,0 zu erreichen, muss die mittlere Funktionalität der Di- oder Polyole die mittlere Funktionalität der Di- oder Polycarbonsäuren übersteigen. Dies wird beispielsweise erreicht, wenn ausschließlich Dicarbonsäuren, aber eine Mischung aus bi- und trifunktionellen Polyolen als Monomere verwendet werden.

Das zahlenmittlere Molekulargewicht des Polyols A2 oder der Bestandteile der Polyolmischung beträgt 100 - 10 000 g/mol, vorzugsweise 500 - 3000 g/mol, bestimmt nach DIN 55672-1 mittels Gelpermeationschromatographie in Tetrahydrofuran als Eluent und Polystyrol zur Kalibrierung.

Entsprechend der Funktionalität und dem Molekulargewicht der Polyole liegt die Konzentration an Hydroxylendgruppen zwischen 10 und 500 mg KOH/g, bevorzugt zwischen 50 und 150 mg KOH/g, titrimetrisch bestimmt nach DIN 53240-2.

Die Konzentration an Säureendgruppen, bestimmt nach DIN EN ISO 2114, liegt unter 5 mg KOH/g, bevorzugt unter 2 mg KOH/g und besonders bevorzugt unter 1 mg KOH/g.

In Bezug auf Glasübergangstemperatur und Schmelzpunkt gibt es bei Polyol A2 bzw. bei den in den Mischungen eingesetzten Polyolen keine Einschränkungen, das heißt das Polyol A2 bzw. die Polyole können fest oder flüssig sein.

Das Gewichtsverhältnis zwischen Polyester A1 und Polyol A2 liegt zwischen 1 : 9 und 9 : 1, vorzugsweise zwischen 1 : 5 und 5 : 1 und ganz besonders bevorzugt zwischen 1 : 2 und 2 : 1.

Bei der zweiten Komponente B des zweikomponentigen Polyurethanklebstoffs handelt es sich um Isocyanatgruppen aufweisende Polyurethanpräpolymere. Letztere bestehen insbesondere aus dem Reaktionsprodukt aus mindestens einem Polyol mit einem Überschuss an Polyisocyanaten. Bevorzugt kommt eine Mischung verschiedener Polyole zum Einsatz.

Bei dem Polyol bzw. der Polyolmischung der Komponente B kann es sich um jedes bekannte Polyol, beispielsweise Polyether, Polyacrylate, Polycarbonate, hydroxyterminierte Polyolefine oder Polyester handeln.

Bevorzugt werden Polyester bzw. Mischungen von Polyestern als Polyole zur Herstellung der Komponente B eingesetzt. Die eingesetzten Polyester werden durch Polykondensation von Di- oder Polyolen und Di- oder Polycarbonsäuren bzw. deren Derivaten hergestellt. Besonders bevorzugt sind als Monomere die Dicarbonsäuren Adipinsäure, Isophthalsäure und Terephthalsäure sowie als trifunktionelle Carbonsäure Trimellitsäureanhydrid. Als Polyole sind Ethylenglykol, Neopentylglykol, Hydroxypivalinsäureneopentylglykol, 1,6-Hexandiol und Trimethylolpropan besonders geeignet. Bei den Monomeren kann sich aber auch um alle anderen bekannten Di- oder Polycarbonsäuren und Di- oder Polyole handeln.

Das in Komponente B eingesetzte Polyol bzw. die Bestandteile der eingesetzten Polyolmischung besitzen eine Funktionalität von mindestens einer Hydroxylendgruppe. Bevorzugt sind Funktionalitäten zwischen 1 und 5, besonders bevorzugt zwischen 2 und 3.

Das zahlenmittlere Molekulargewicht der in Komponente B eingesetzten Polyole beträgt 100 - 20 000 g/mol, vorzugsweise 500 - 5000 g/mol. Entsprechend der Funktionalität und dem Molekulargewicht der Polyole liegt die Konzentration an Hydroxylendgruppen zwischen 10 und 500 mg KOH/g, bevorzugt zwischen 20 und 150 mg KOH/g, titrimetrisch bestimmt nach DIN 53240-2. Die Konzentration an Säureendgruppen, bestimmt nach DIN EN ISO 2114, liegt unter 5, bevorzugt unter 2 mg KOH/g, und besonders bevorzugt unter 1 mg KOH/g. In Bezug auf Glasübergangstemperatur und Schmelzpunkt der in Komponente B eingesetzten Polyole gibt es keine Einschränkungen.

Die vorab genannten Polyole bzw. Polymischungen müssen zum Einsatz als Komponente B in Isocyanatgruppen aufweisende Polyurethanpräpolymere umgesetzt werden. Dazu wird das Polyol bzw. die Polyolmischung in Abhängigkeit von der Viskosität der jeweiligen Formulierung bei Temperaturen bis zu 170 °C, bevorzugt zwischen 80 und 130 °C, mit einem Überschuss an Polyisocyanaten umgesetzt. Die eingesetzten Polyisocyanate besitzen eine Isocyanatfunktionalität von mindestens 2,0.

Als Polyisocyanate können di- oder multifunktionelle, aromatische, aliphatische oder cycloaliphatische Isocyanate sowie carbodiimidmodifizierte Isocyanate oder isocyanatterminierte Präpolymere eingesetzt werden. Beispiele geeigneter Polyisocyanate sind 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat und Mischungen daraus. Aromatische Polyisocyanate werden besonders bevorzugt eingesetzt, insbesondere bevorzugt handelt es sich um 4,4'-Diphenylmethandiisocyanat und Mischungen aus 4,4'-Diphenylmethandiisocyanat und 2,4'-Diphenylmethandiisocyanat.

Das OH:NCO-Verhältnis der Polyole, bezogen auf alle Polyole sowohl in Komponente A als auch in Komponente B der Klebstoffrezeptur, zum eingesetzten Polyisocyanat zur Herstellung der Komponente B beträgt 1 : 0,8 bis 1 : 3, vorzugsweise von 1 : 1,0 bis 1 : 1,5 und besonders bevorzugt 1 : 1,1. Um Nebenreaktionen mit Restfeuchte zu vermeiden, wird das Polyol bzw. die Polyolmischung vor Umsetzung mit dem Isocyanat bei erniedrigtem Druck entgast. Die Lagerung der Komponente B muss aus den gleichen Gründen unter inerten Bedingungen erfolgen.

Weiterhin können auch in Komponente B zusätzlich Additive eingesetzt werden. Als Additive für Komponente A und/oder B eignen sich beispielsweise Füllstoffe, Rheologiemodifizierer, Pigmente oder Farbstoffe, nichtfunktionalisierte Polymere, Flammschutzmittel, Tackifier, Wachse, Weichmacher, Trocknungsmittel, Haftvermittler, Fasern, latente Härter, Hydrolysestabilisatoren sowie Alterungsschutz-und Hilfsmittel. Es können auch Katalysatoren enthalten sein, diese sind aber nicht zwingend erforderlich.

Es kann sich dabei um Rheologiemodifizierer, wie Aerosil^{®}, nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente, externe Flammschutzmittel; Tackifier, wie. z. B. Kolophoniumharze, Kohlenwasserstoffharze, Phenolharze, Wachse, Weichmacher, Trocknungsmittel, Haftvermittler, Fasern, latente Härter, Hydrolysestabilisatoren sowie Alterungsschutz-und Hilfsmittel handeln. Bevorzugt werden Rheologiemodifizierer, insbesondere Flammruß, Talkum und Kreide eingesetzt.

Der Gesamtanteil an Additiven in jeder Komponente liegt bei 0 bis 50 Gew.-%, bevorzugt bei 5 bis 30 Gew.-%.

Die beiden Komponenten A und B werden bis zu dem erfindungsgemäßen Einsatz des zweikomponentigen Polyurethanklebstoffs getrennt gelagert. Beide Komponenten können in der Regel bei Raumtemperatur unter Ausschluss von Feuchtigkeit mehrere Wochen gelagert werden.

Weiterer Gegenstand der vorliegenden Erfindung ist die Verwendung der zweikomponentigen Polyurethanklebstoffe zur Herstellung von Verklebungen.

Der zweikomponentige Polyurethanklebstoff wird bei einer Temperatur oberhalb der Raumtemperatur als Schmelze aufgetragen und zeichnet sich durch eine hohe Anfangsfestigkeit und durch eine gute Endfestigkeit bei gleichzeitig hoher Dehnung aus. Der Klebstoff erfüllt somit die Anforderungen an Klebverbindungen mit kurzen Taktzeiten, die eine rasche Weiterverarbeitung ermöglichen und gleichzeitig hohen mechanischen Belastungen standhalten.

Das erfindungsgemäße Verfahren zur Herstellung von Verklebungen auf Basis der zweikomponentigen Polyurethanklebstoffe, umfasst das getrennte Aufschmelzen der A und B-Komponenten abhängig von der Schmelzviskosität auf Temperaturen oberhalb der Schmelz- und/oder Glasübergangspunkte aller Bestandteile in beiden Komponenten, bevorzugt mindestens 70 °C; Mischen der beiden flüssigen Komponenten A und B und anschließendes Auftragen auf die zu verklebenden Substrate.

Nach dem Aufschmelzen der Komponenten A und B werden diese also als Schmelze gemischt und die resultierende Klebstoffformulierung ohne weitere Lagerung direkt auf die zu verklebenden Substrate aufgetragen.

Die beiden flüssigen Komponenten A und B werden in einem Mischungsverhältnis zwischen 1 : 3 und 3 : 1, bevorzugt zwischen 1 : 2 und 2 : 1 und besonders bevorzugt von 1 : 1 Volumenprozent miteinander vermischt. Die Bestandteile, insbesondere die Additive in den Komponenten A und B sind so gewählt, dass beide Komponenten ähnliche Viskositäten aufweisen und sich gut vermischen lassen. Die Vermischung kann dynamisch oder statisch erfolgen. Bevorzugt werden die beiden Komponenten aus beheizbaren Kartuschen mit Hilfe einer manuellen oder pneumatischen Pistole und einem statischen Mischer verarbeitet. Die beiden Komponenten können auch in größere Gebinde wie Fässer oder Hobbocks abgefüllt werden und vor Verarbeitung in geeigneten Aufschmelzanlagen, beispielsweise mit beheizbaren Fassschmelzanlagen, aufgeschmolzen und mit Pumpanlagen dosiert und gemischt werden. Der Schmelzklebstoff wird kurz nach dem Vermischen der Komponenten als Schmelze auf das Substrat aufgetragen und innerhalb der offenen Zeit mit einem zweiten Substrat durch kurzes Anpressen verklebt.

Bezüglich der Anwendung des zweikomponentigen Schmelzklebstoffs gibt es grundsätzlich keine Einschränkungen. Besonders geeignet sind Verklebungen, bei denen schnell eine ausreichende Handhabungsfestigkeit erreicht werden soll, beispielsweise um kurze Taktzeiten zu ermöglichen.

Die Adhäsion ist über die verwendeten Polyole für ein breites Spektrum an Substraten einstellbar. Mögliche, beispielhaft genannte Substrate sind Metalle, wie z. B. Stahl oder Aluminium, Kunststoffe, wie beispielsweise Polyamid, Polycarbonat, Polyethylenterephthalat oder ABS, insbesondere faserverstärkte Kunststoffe (FRPs) wie carbonfaser- oder glasfaserverstärkte Polyester oder Epoxide (CFK und GFK) und Sheet Moulding Compounds (SMC) sowie Holz, Glas, Glaskeramik, Beton, Mörtel, Ziegel, Steine.

Der Vorteil des beschriebenen Auftragverfahrens unter Einsatz des zweikomponentigen Polyurethanklebstoffs ist eine verbesserte Handhabungsfestigkeit gegenüber dem Stand der Technik durch einen schnelleren Aufbau der Kohäsion. Direkt nach dem Auftrag kommt es durch das Abkühlen der Schmelze zunächst zu einem physikalischen Abbinden durch Kristallisation und/oder Erstarren der Polymeren unterhalb ihres Schmelzpunkts und/oder Glasübergangpunkts. Deutlich früher als eine chemischen Vernetzung ermöglicht das thermoplastische physikalische Abbinden eine hohe Handhabungsfestigkeit des Klebstoffs bereits nach kurzer Zeit und somit ein schnelles Weiterverarbeiten der verklebten Substrate. Ein Zusatz von Katalysatoren ist daher nicht erforderlich, da das Abbindeverhalten über die physikalischen Eigenschaften der Polyole und Polyisocyanate gesteuert wird. In einem parallel ablaufenden, jedoch deutlich langsameren Schritt findet die chemische, irreversible Aushärtung statt. Es bildet sich dabei ein stabiles Polyurethannetzwerk aus, das für eine hohe Endfestigkeit sorgt.

Das der vorliegenden Erfindung zugrunde liegende Auftragsverfahren eines zweikomponentigen Polyurethanschmelzklebstoffs ist in WO89/01503 beschrieben. Die chemische Zusammensetzung der dort eingesetzten Komponenten wird jedoch nicht weiter spezifiziert, in den Beispielen wird ein Epoxidharz mit sekundären Hydroxylgruppen als Polyolkomponente genannt. Insbesondere auf die erfindungsgemäß bedeutsame Funktionalität der eingesetzten Komponenten wird im Stand der Technik nicht näher eingegangen. Diese ist jedoch für die Ausbildung einer ausreichenden Endfestigkeit, die die Anforderungen an einen semistrukturellen oder strukturellen Klebstoff erfüllt, entscheidend. Im Rahmen der vorliegenden Erfindung wird gezeigt, dass sich durch eine Mischung von bifunktionellen und höher funktionellen Polyolen in der Komponente A die Eigenschaften des Klebstoffs gezielt einstellen lassen, so dass eine ausreichende Endfestigkeit bei gleichzeitig hoher Dehnung resultiert. Hierzu ist eine geeignete Kombination der einzelnen Polyole in der Mischung erforderlich: Mindestens ein Bestandteil A1 der Komponente A muss eine Glasübergangstemperatur und/oder einen Schmelzpunkt oberhalb der Raumtemperatur von 23 °C besitzen um eine ausreichende Handhabungsfestigkeit einzustellen. Zudem muss mindestens ein weiterer Bestandteil A2 der Komponente A eine Hydroxylgruppenfunktionalität von größer zwei besitzen um eine ausreichend hohe Vernetzungsdichte und damit Kohäsion zu erzielen.

Insbesondere eignen sich das erfindungsgemäße Verfahren zur Herstellung von Verklebungen auf Basis von zweikomponentigen Polyurethanklebstoffen für die (semi-)strukturelle Verklebung von temperaturempfindlichen carbonfaserverstärkten Verbundwerkstoffen.

Die Art und der Umfang der Verklebung sind dabei nicht limitiert. Insbesondere handelt sich bei den Verklebungen um Verklebungen im Automobil- und Transportbereich, in der Bauindustrie und in der holzverarbeitenden Industrie.

Der ausgehärtete Schmelzklebstoff weist bei 23 °C eine Zugfestigkeit von mehr als 5 MPa, bevorzugt mehr als 10 MPa sowie eine Bruchdehnung von mehr als 100 %, bevorzugt von mehr als 150 % auf.

Die Bestimmung der Zugfestigkeit und Bruchdehnung erfolgen nach DIN 53504/ DIN EN ISO 527 mit einer Geschwindigkeit von 100 mm/min an einer 2 mm dicken Probe, die 7 Tage bei 20 °C und 65 % relativer Luftfeuchte konditioniert wurde.

Der ausgehärtete Schmelzklebstoff weist eine Zugscherfestigkeit bei 23 °C von mehr als 5 MPa, bevorzugt mehr als 10 MPa bei einer Klebstoffdicke von 2 mm auf. Die Bestimmung der Zugscherfestigkeit erfolgt nach DIN EN 1465 mit einer Geschwindigkeit von 12 mm/min.

Die Handhabungsfestigkeit von 0,3 MPa wird nach spätestens 60 Minuten, bevorzugt nach spätestens 30 Minuten und besonders bevorzugt nach spätestens 15 Minuten erreicht. Die Handhabungsfestigkeit meint die notwendige Klebfestigkeit, um verklebte Substrate ohne weitere mechanische Fixierung einer weiteren Verarbeitung zuführen zu können. Die Handhabungsfestigkeit wird anhand der Zugscherfestigkeit nach DIN EN 1465 ermittelt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

Im Rahmen der Beispiele werden folgende Polyester als Polyole eingesetzt:
P1 ist ein bei Raumtemperatur fester, nichtkristalliner Polyester aus C2-, C5- und
C10-Diolen und Adipinsäure, Terephthalsäure und Isophthalsäure mit einer OH-Zahl von 50 mg KOH/g.

P2 ist ein bei Raumtemperatur fester, kristalliner Polyester aus Adipinsäure und Hexandiol mit einer OH-Zahl von 50 mg KOH/g.

P3 ist ein bei Raumtemperatur flüssiger Polyester aus C2- und C5-Diolen und Adipinsäure, Terephthalsäure und Isophthalsäure mit einer OH-Zahl von 100 mg KOH/g.

P4 ist ein bei Raumtemperatur fester, nichtkristalliner Polyester aus C2- und C5-Diolen, Terephthalsäure und Isophthalsäure mit einer OH-Zahl von 70 mg KOH/g. P5 ist ein bei Raumtemperatur fester, kristalliner Polyester aus Adipinsäure und Hexandiol mit einer OH-Zahl von 30 mg KOH/g.

Allgemeine Herstellvorschrift der A-Komponente:
In einem Planschliffkolben werden die in der Tabelle 1 angegebenen Mengen der Polyester P1, P2 und P3 aufgeschmolzen, 30 Minuten bei 130 °C homogenisiert und blasenfrei abgefüllt.

Die Einarbeitung der Füllstoffe erfolgt im Speedmixer (Speedmixer^{™} DAC 150 von Fa. Flack Tek Inc) unter Ausschluss von Luftfeuchtigkeit. Dazu wird die Polyolmischung aufgeschmolzen, die in der Tabelle 1 angegebenen Einwaagen an Flammruß, Aerosil und Talkum zugeben und 5 Minuten bei 90 °C bei 3000 Umdrehungen/ Minute homogenisiert und in eine Kartusche abgefüllt. Alternativ können die Füllstoffe in einem Dispermaten eingearbeitet werden. Zur Vermeidung von Blasen wird die Masse anschließend kurz entgast.

Allgemeine Herstellvorschrift der B-Komponente:
In einem Planschliffkolben werden die in der Tabelle 1 angegebenen Mengen der getrockneten Polyester P1, P2 und P3 auf 130 °C aufgeschmolzen. Danach wird die in der Tabelle 1 angegebene Menge an 4,4`- Diphenylmethandiisocyanat (MDI) dazugegeben und zügig homogenisiert. Zur vollständigen Umsetzung der Reaktionspartner wird 30 Minuten bei 130 °C unter Schutzgasatmosphäre gerührt.

Anschließend wird das isocyanathaltige Präpolymer blasenfrei in feuchtigkeitsdichte Kartuschen abgefüllt.

Die Einarbeitung der Füllstoffe erfolgt im Speedmixer (Speedmixer^{™} DAAC 150 von Fa. Flack Tek Inc) unter Ausschluss von Luftfeuchtigkeit. Dazu wird das Präpolymer aufgeschmolzen, die in der Tabelle angegebenen Einwaagen an Talkum und Kreide zugeben und 5 Minuten bei 90 °C bei 3000 Umdrehungen/ Minute homogenisiert und in einer feuchtigkeitsdichten Kartusche abgefüllt.

Alternativ können die Füllstoffe in einem Dispermaten eingearbeitet werden. Zur Vermeidung von Blasen wird die Masse anschließend kurz entgast.

**Tabelle 1: Herstellung der Einzelkomponenten im Speedmixer (Beispiel 1) und im Dispermaten (Beispiel 2)**

| **A-Komponente** | OH-Funktionalität | T_{g} [°C] | Tₘ [°C] | OH-Zahl [mg KOH/g] | Einwaage [g] |
|---|---|---|---|---|---|
| A1 P1 | 2 | 24 | - | 50 | 12,5 |
| A1 P2 | 2 | -65 | 54 | 50 | 7,5 |
| A2 P3 | 3 | -29 | - | 100 | 40 |
| Flammruß 101 ¹⁾ | | | | | 0,6 |
| Aerosil ^{®} R 202 ²⁾ | | | | | 1,2 |
| Finntalc M 15 ³⁾ | | | | | 6,0 |
| | | | | | |

| **B-Komponente** | OH-Funktionalität | T_{g} [°C] | Tₘ [°C] | OH-Zahl [mg KOH/g] | Einwaage [g] |
|---|---|---|---|---|---|
| B1 P1 | 2 | 25 | - | 50 | 12,5 |
| B1 P2 | 2 | -65 | 54 | 50 | 17,5 |
| B2 P3 | 3 | -30 | - | 100 | 10 |
| 4,4' - MDI ⁴⁾ | | | | | 18,4 |
| Finntalc M 15 ³⁾ | | | | | 5,8 |
| Kreide Omyabond 520-OM ⁶⁾ | | | | | 23,6 |

| | | | | | |
|---|---|---|---|---|---|
| 1) Ruß von Fa. Orion Engineered Carbons 2) Thixotropiermittel auf Kieselsäurebasis von Evonik Industries AG 3) Magnesiumsilikat von Fa. Mondo Minerals 4) 4,4`- Diphenylmethandiisocyanat, z. B. Lupranat ME von Fa.BASF 5) Calciumcarbonat von Fa. Qmya AG | | | | | |

**Tabelle 2: Herstellung der Einzelkomponenten im Speedmixer (Beispiel 3 und im Dispermaten (Beispiel 4)**

| **A-Komponente** | OH-Funktionalität | T_{g} [°C] | Tₘ [°C] | OH-Zahl [mg KOH/g] | Einwaage [g] |
|---|---|---|---|---|---|
| A1 P4 | 2 | 20 | - | 70 | 10 |
| A1 P5 | 2 | -60 | 55 | 30 | 9 |
| A2 P3 | 3 | -29 | - | 100 | 40 |
| Flammruß 101 | | | | | 0,6 |
| Aerosil R 202 | | | | | 1,2 |
| Finntalc M 15 | | | | | 5,9 |
| | | | | | |

| **B-Komponente** | OH-Funktionalität | T_{g} [°C] | Tₘ [°C] | OH-Zahl [mg KOH/g] | Einwaage [g] |
|---|---|---|---|---|---|
| B1 P4 | 2 | 20 | - | 70 | 10 |
| B1 P5 | 2 | -60 | 55 | 30 | 21 |
| B2 P3 | 3 | -30 | | 100 | 10 |
| 4,4'- MDI | | | | | 17,9 |
| Finntalc M 15 | | | | | 5,9 |
| Kreide Omyabond 520-OM | | | | | 23,4 |

### Anwendung der zweikomponentigen Polyurethanklebstoffe unter Einsatz eines Statikmischers

Die beiden Komponenten A und B werden jeweils getrennt voneinander gelagert und vor Anwendung bei 90 °C aufgeschmolzen. Beide Kartuschen sind gleich groß, um ein Mischungsverhältnis von 1:1 einzustellen. Die auf 90 °C erwärmten Kartuschen werden zusammengesteckt, ein ebenfalls auf 90 °C erwärmter Statikmischer (Sulzer MCH 13-24) wird aufgeschraubt und in eine Kartuschenpistole eingelegt. Durch den an der Kartuschenpistole angelegten Druck werden die einzelnen Komponenten durch die Bestätigung des Pistolenhebels durch den Statikmischer gedrückt und vermischt. Um eine vollständige Durchmischung der beiden Komponenten zu gewährleisten, wird der zuerst ausgetragene Strang von der Länge des Statikmischers verworfen.

Der so vermischte Klebstoff wird innerhalb der offenen Zeit auf die zu verklebenden Substrate aufgetragen und charakterisiert. Die Klebstofffuge des nicht ausgehärteten Klebstoffs beträgt 2 mm. Die erhaltenen klebtechnischen Eigenschaften sind in Tabelle 3 zusammengefasst.

**Tabelle 3: Klebtechnische Eigenschaften**

| | **Beispiel 1** | **Beispiel 2** | **Beispiel 3** | **Beispiel 4** |
|---|---|---|---|---|
| Offene Zeit [s] | 510 | 590 | 200 | 210 |
| Abbindezeit [s] | 480 | 450 | 180 | 180 |
| Handhabungsfestigkeit [min] | 30 | 30 | 10 | 10 |
| Zugfestigkeit [N/mm²] | 15 | 12 | 19 | 16 |
| Bruchdehnung [%] | 240 | 200 | 190 | 170 |
| Zugscherfestigkeit PC [MPa] | 10 | 10 | 10 | 9 |
| Zugscherfestigkeit CFK [MPa] | 11 | 9 | 12 | 10 |

Zur Bestimmung der offenen Zeit werden Papierstreifen in Zeitintervallen von 30 Sekunden auf die Klebstoffraupe gedrückt. Sobald die Oberfläche der Klebstoffraupe klebfrei ist, werden die Papierstreifen abgezogen. Die Offene Zeit entspricht dem Zeitintervall, bei dem der Papierstreifen ohne Faserausriss entfernt werden kann..

Unter der Abbindezeit versteht man die Zeit, die benötigt wird, bis zwei in T-Form verklebte 100 mm lange, 20 mm breite und 5 mm dicke Holzsubstrate eine Festigkeit erreichen, bei der sie nicht mehr durch Belastung mit einem Gewicht von 2 kg getrennt werden können. Die verklebte Fläche beträgt 400 mm².

Zur Herstellung der Verklebung wird der Klebstoff mit einer Schichtdicke von 2 mm auf die zu verklebende Fläche des ersten Substrats aufgetragen und mit dem Gegensubstrat in Form eines "T" verklebt. Der lange Schenkel wird dann in Zeitintervallen von 30 Sekunden mit einem 2 kg Gewicht belastet.

Als Abbindezeit wird der Zeitpunkt des Einhängens des Gewichts angegeben, dessen Belastung die Verklebung standgehalten hat.

Zur Bestimmung der Zugfestigkeit und Bruchdehnung wird aus der Klebstoffmasse ein 2 mm dicker Film hergestellt. Nach einer Lagerungszeit von 7 Tagen bei 20 °C und 65 % relativer Feuchte werden daraus hantelförmige Proben mit einer Länge von 80 mm, einer Steglänge von 30 mm und einer Stegbreite von 4 mm nach der DIN EN 53504 ausgestanzt und mit einer Zugprüfmaschine bei 23 +/- 2 °C mit einer Geschwindigkeit von 100 mm/Minute bis zum Bruch gezogen. Die Zugfestigkeit ergibt sich dem Verhältnis der gemessenen Maximalkraft und des Anfangsquerschnitts der Probe. Die Bruchdehnung ist der Quotient der

Längenänderung zur Ausgangslänge in Prozent.

Die Bestimmung der Zugscherfestigkeiten erfolgt an einschnittig überlappten Verklebungen gemäß DIN EN 1465 mittels einer Zugprüfmaschine mit einer Geschwindigkeit von 12 mm/Minute bei einer Temperatur von 23+/- 2 °C bis zum Bruch der Verklebung. Die zu verklebenden Polycarbonatsubstrate (PC) werden mit Isopropanol gereinigt. Bei den zu verklebenden carbonfaserverstärkten Kunststoffsubstraten auf Basis einer Epoxidharz-Matrix (CFK) wird das Abreißgewebe entfernt. Weitere Vorbehandlungen finden nicht statt.

Die Klebstoffdicke beträgt 2 mm. Die verklebte Fläche beträgt 300 mm².

Die Verklebungen werden bis zur Prüfung 7 Tage bei 20 °C und 65 % relativer Feuchte gelagert. Das Bruchbild war jeweils kohäsiv.

Bei der Bestimmung der Handhabungsfestigkeit wird der Zeitpunkt nach dem Fügen der CFK-Substrate ermittelt, an dem die Zugscherfestigkeit 0,3 MPa beträgt.

## Patentansprüche

1. Verfahren zur Herstellung von Verklebungen auf Basis von zweikomponentigen Polyurethanklebstoffen umfassend eine erste Komponente A enthaltend mindestens einen Polyester A1, der bei Raumtemperatur fest ist und mindestens ein Polyol A2 mit einer Hydroxylgruppenfunktionalität größer 2,0 und optional Additive und eine zweite Komponente B enthaltend Isocyanatgruppen aufweisende Polyurethanpräpolymere und optional Additive, umfassend das getrennte Aufschmelzen der A und B-Komponenten abhängig von der Schmelzviskosität auf Temperaturen oberhalb der Schmelz-und/oder Glasübergangspunkte aller Bestandteile in beiden Komponenten, Mischen der beiden flüssigen Komponenten A und B und anschließenden Auftrag auf die zu verklebenden Substrate.

2. Verfahren gemäß Anspruch 1, **dadurch gekennzeichnet, dass** die Polyester A1 eine Funktionalität von mindestens einer Hydroxylendgruppe aufweisen.

3. Verfahren gemäß Anspruch 1 oder 2, **dadurch gekennzeichnet, dass** die Glasübergangstemperatur und/oder der Schmelzpunkt von A1, bestimmt nach der DSC-Methode nach DIN 53765, oberhalb von 23 °C liegen.

4. Verfahren gemäß einem oder mehreren der Ansprüche 1 bis 3, **dadurch gekennzeichnet, dass** es sich bei dem Polyol A2 um Polyether, Polyacrylate, Polycarbonate oder hydroxyterminierte Polyolefine oder Polyester handelt.

5. Verfahren gemäß einem oder mehreren der Ansprüche 1 bis 4, **dadurch gekennzeichnet, dass** es sich bei dem Polyol A2 um Polyester handelt

6. Verfahren gemäß einem oder mehreren der Ansprüche 1 bis 5, **dadurch gekennzeichnet, dass** die Isocyanatgruppen aufweisenden Polyurethanpräpolymere aus dem Reaktionsprodukt aus mindestens einem Polyol mit einem Überschuss an Polyisocyanaten bestehen.

7. Verfahren gemäß Anspruch 6, **dadurch gekennzeichnet, dass** als Polyisocyanate di- oder multifunktionelle, aromatische, aliphatische oder cycloaliphatische Isocyanate sowie carbodiimidmodifizierte Isocyanate oder isocyanatterminierte Präpolymere eingesetzt werden.

8. Verfahren gemäß einem oder mehreren der Ansprüche 1 bis 7, **dadurch gekennzeichnet, dass** die Additive für Komponente A und/oder B ausgewählt sind aus der Gruppe umfassend Füllstoffe, Rheologiemodifizierer, Pigmente oder Farbstoffe, nichtfunktionalisierte Polymere, Flammschutzmittel, Tackifier, Wachse, Weichmacher, Trocknungsmittel, Haftvermittler, Fasern, latente Härter, Hydrolysestabilisatoren sowie Alterungsschutz- und Hilfsmittel.

9. Verfahren gemäß einem der Ansprüche 1 bis 8, **dadurch gekennzeichnet, dass** es sich um Verklebungen im Automobil- und Transportbereich, in der Bauindustrie und in der holzverarbeitenden Industrie handelt.

10. Verfahren gemäß einem der Ansprüche 1 bis 9, **dadurch gekennzeichnet, dass** die beiden flüssigen Komponenten A und B in einem Mischungsverhältnis zwischen 1 : 9 und 9 : 1 Volumenprozent miteinander vermischt werden.

## Claims

1. Method for producing adhesive bonds based on two-pack polyurethane adhesives comprising a first pack A containing at least one polyester A1 which is solid at room temperature and at least one polyol A2 having a hydroxyl group functionality greater than 2.0 and optionally additives, and a second pack B containing polyurethane prepolymers having isocyanate groups and optionally additives, comprising the separate melting of the A and B packs, depending on the melt viscosity, at temperatures above the melting points and/or glass transition points of all the constituents in the two packs, mixing of the two liquid packs A and B and subsequent application to the substrates to be bonded.

2. Method according to Claim 1, **characterized in that** the polyesters A1 have a functionality of at least one hydroxyl end group.

3. Method according to Claim 1 or 2, **characterized in that** the glass transition temperature and/or the melting point of A1, determined by the DSC method according to DIN 53765, is above 23°C.

4. Method according to one or more of Claims 1 to 3, **characterized in that** the polyol A2 comprises polyethers, polyacrylates, polycarbonates or hydroxyl-terminated polyolefins or polyesters.

5. Method according to one or more of Claims 1 to 4, **characterized in that** the polyol A2 comprises polyesters.

6. Method according to one or more of Claims 1 to 5, **characterized in that** the polyurethane prepolymers having isocyanate groups consist of the reaction product of at least one polyol with an excess of polyisocyanates.

7. Method according to Claim 6, **characterized in that** the polyisocyanates used are di- or multifunctional, aromatic, aliphatic or cycloaliphatic isocyanates, and carbodiimide-modified isocyanates or isocyanate-terminated prepolymers.

8. Method according to one or more of Claims 1 to 7, **characterized in that** the additives for pack A and/or B are selected from the group comprising fillers, rheology modifiers, pigments or dyes, nonfunctionalized polymers, flame retardants, tackifiers, waxes, plasticizers, desiccants, adhesion promoters, fibres, latent hardeners, hydrolysis stabilizers, and ageing stabilizers and auxiliaries.

9. Method according to any of Claims 1 to 8, **characterized in that** the adhesive bonds are in the automotive and transport sector, in the construction industry and in the wood processing industry.

10. Method according to any of Claims 1 to 9, **characterized in that** the two liquid packs A and B are mixed with one another in a mixing ratio between 1:9 and 9:1 per cent by volume.

## Revendications

1. Procédé de réalisation de collages à base d'adhésifs de polyuréthane à deux composants, comprenant un premier composant A, contenant au moins un polyester A1, qui est solide à température ambiante, et au moins un polyol A2 présentant une fonctionnalité de groupes hydroxyle supérieure à 2,0 et éventuellement des additifs, et un deuxième composant B contenant des prépolymères de polyuréthane présentant des groupes isocyanate et éventuellement des additifs, comprenant la fusion séparée des composants A et B en fonction de la viscosité en messe fondue à des températures supérieures aux points de fusion et/ou de transition vitreuse de tous les constituants dans les deux composants, le mélange des deux composants liquides A et B et l'application consécutive sur les substrats à coller.

2. Procédé selon la revendication 1, **caractérisé en ce que** les polyesters A1 présentent une fonctionnalité d'au moins un groupe terminal hydroxyle.

3. Procédé selon la revendication 1 ou 2, **caractérisé en ce que** la température de transition vitreuse et/ou le point de fusion de A1, déterminé(e) (s) selon le procédé de DSC (calorimétrie différentielle à balayage) selon la norme DIN 53765, est/sont supérieur(e) (s) à 23°C.

4. Procédé selon l'une ou plusieurs des revendications 1 à 3, **caractérisé en ce qu'**il s'agit, pour le polyol A2, de polyéthers, de polyacrylates, de polycarbonates ou de polyoléfines terminées par hydroxy ou de polyesters.

5. Procédé selon l'une ou plusieurs des revendications 1 à 4, **caractérisé en ce qu'**il s'agit, pour le polyol A2, de polyesters.

6. Procédé selon l'une ou plusieurs des revendications 1 à 5, **caractérisé en ce que** les prépolymères de polyuréthane présentant des groupes isocyanate sont constitués par le produit de réaction d'au moins un polyol avec un excès de polyisocyanates.

7. Procédé selon la revendication 6, **caractérisé en ce qu'**on utilise, comme polyisocyanates, des isocyanates difonctionnels ou multifonctionnels, aromatiques, aliphatiques ou cycloaliphatiques ainsi que des isocyanates modifiés par carbodiimide ou des prépolymères terminés par isocyanate.

8. Procédé selon l'une ou plusieurs des revendications 1 à 7, **caractérisé en ce que** les additifs pour les composants A et/ou B sont choisis dans le groupe comprenant les charges, les modificateurs de rhéologie, les pigments ou les colorants, les polymères non fonctionnalisés, les agents ignifuges, les tackifiants, les cires, les plastifiants, les dessiccateurs, les promoteurs d'adhérence, les fibres, les durcisseurs latents, des stabilisants à l'hydrolyse ainsi que les agents de protection contre le vieillissement et les adjuvants.

9. Procédé selon l'une des revendications 1 à 8, **caractérisé en ce qu'**il s'agit de collages dans le domaine automobile et du transport, dans l'industrie de la construction et dans l'industrie de transformation du bois.

10. Procédé selon l'une des revendications 1 à 9, **caractérisé en ce que** les deux composants liquides A et B sont mélangés l'un à l'autre dans un rapport de mélange entre 1:9 et 9:1 % en volume.
